# EUROPEAN PATENT SPECIFICATION

(11) **EP 3 792 185 B1**
(45) Date of publication and mention of the grant of the patent: **19.04.2023**
(21) Application number: 19382789.6
(22) Date of filing: 12.09.2019
(51) Int. Cl.: B64D 41/00, F02C 7/06, F16H 57/04, F16K 1/20, F16K 15/03, F16K 31/22, F16N 19/00

(54) **OVERFILL VALVES**
ÜBERFÜLLVENTILE
SOUPAPES DE TROP-PLEIN

(43) Date of publication of application: 17.03.2021
(73) Proprietor: Airbus Operations, S.L.U., 28906 Getafe (Madrid) (ES)
(72) Inventor: CHIABRANDO, Marcos, Javier, 28906 GETAFE (Madrid) (ES); FERNANDEZ LOPEZ, Pio, 28906 GETAFE (Madrid) (ES)
(74) Representative: Herrero & Asociados, S.L.

(56) References cited:
- CN-A- 105 422 925
- JP-A- 2019 123 439
- KR-A- 20110 051 045
- KR-B1- 100 525 160
- KR-B1- 101 146 131
- US-A- 3 330 157
- US-A1- 2012 180 881
- US-A1- 2018 143 060

## Description

### Object of the invention

The present invention refers to overfill valves.

Particularly, the object of the present invention is to provide an overfill valve for an auxiliary power unit (APU) oil sump integrated in the APU gearbox of an APU in an aircraft.

### Background of the invention

An APU in an aircraft provides electricity in addition to, or supplementary to, the power produced by the main engine. Generally, the APU uses gas turbine engines, like those of the main engine, although smaller. An APU turbine is, therefore, limited in efficiency and creates gaseous emissions similar to the main engine.

The APU lubrication system provides pressurized oil to the APU gearbox and the electrical generator for lubrication and heat removal. The lubrication system comprises a mechanically driven lubricating module or oil sump integrated in the APU gearbox. The APU gearbox reduces the turbine shaft revolutions per minute to a speed suitable to operate the gearbox mounted accessories. Accessories include the mechanically driven lubricating module, a fuel control unit, an electric starter and the APU electrical generator.

US2012180881 and US3330157 disclose prior art overfill valves.

The oil level in the oil sump can be conventionally checked using a sight glass on the oil filler. However, oil overfill events occur during maintenance. The current APU lubrication system installation must thus be improved to avoid overfill in the oil sump of the APU gearbox. As the oil sump is part of the APU gearbox, there are many moving parts that make difficult placing conventional draining devices. The present invention provides a solution that solves at least the aforementioned issues.

### Description of the invention

The proposed overfill valve according to the present invention is defined by the features of claim 1 and can avoid an oil overfilling in the APU lubricating system. To integrate the overfill valve, an existing manufactured port in the lubricating system can be used to reduce the impact in the APU gearbox, and thus; achieving a very compact solution with a straightforward setup.

Hence, to integrate the proposed valve into the APU gearbox, it has been identified a manufactured port which is located at a maximum oil level of the existing APU oil sumps. Thus, the proposed valve is designed to be placed in such port. This fact presents different challenges which the proposed valve can solve: The APU oil sump is part of the APU gearbox assembly, meaning that there are many moving parts which makes difficult to place any type of valve. Furthermore, the APU gearbox assembly is a pressurized area, therefore the overfill valve must avoid any possible depressurization. In this respect, the valve allows the APU gearbox to be airtight at any time (either when the valve is open or closed). The diameter of the manufactured port is reduced; therefore, the overfill valve must be very compact in dimensions. Hence, the proposed valve is a compact solution that permits not only to drain any excess of oil but also to keep the hermeticity, in particular the airtightness of the APU gearbox with a single hinged flap while avoiding any pressurized air escape from the gearbox and thus, keeping the APU gearbox running pressure. In this regard, the running pressure while the APU is running may differ but is not very different from the outside pressure.

Hence, a first aspect of the present invention is an overfill valve for an oil sump integrated in a gearbox of an APU of an aircraft. The overfill valve comprises a housing adapted to be connected by a first end to an oil sump port and to receive an excess of oil from the oil sump. The valve also comprises a hinged flap which closes the valve in its rest position and which is movable inward the housing and that can be established in a lower part of the housing. The valve in the closed position allows the gearbox to be hermetic.

Furthermore, the valve comprises a hinge between the hinged flap and the housing.

The hinged flap comprises a floating device configured to be subjected to a floating force adapted to hinge the hinged flap upon reaching a predetermined oil level, e.g. threshold "h", in the housing that causes buoyancy of the floating device when the gearbox is not running.

The floating device is designed to be adapted to exert a floating force and momentum superior to a hydrostatic pressure of oil in the housing when the oil is over the predetermined threshold "h". This threshold level "h" can be determined slightly higher than the "full" mark in the oil sump of the gearbox. Hence, the overfill valve can be particularly dedicated for example to evacuate overfill oil when the APU is not running an oil is added by a person in charge of its maintenance.

Generally, when the APU is running, the oil level in the housing is lower than when the APU is not running so the oil level in the housing may not reach the oil threshold level "h". Furthermore, in this scenario the hinged flap may not hinge upon the oil level reaching the predetermined threshold level "h" of oil in the housing due to the air pressure in the APU gearbox. When the APU is running, the pressure in the gearbox applied on the surface of the hinged flap may contribute to keep the valve closed. In this situation, the oil level in the housing may have to exceed the threshold "h" by a predetermined amount for the hinged flap to hinge and open the valve. In this regard, when the APU gearbox is running and the valve opens, only the excess of oil is drained from the housing without letting any pressurized air from the gearbox to escape to the outside at any moment because the hinged flap will come back to its rest position closing the valve as soon as the oil level decreases below the threshold level "h". The remaining excess of oil within the housing below the predetermined oil level "h" avoids any air scape from the APU and hence; only oil and not air will be drained from the open valve and therefore, the airtightness in the APU can be preserved when the APU is running. This fact permits keeping the pressurization in the APU gearbox at a running pressure. After the drain of the excess of oil, the hinging of the hinged flap back to its rest position causes the closing of the overfill valve.

In some embodiments, the floating device is located at the bottom of the hinged flap.

The floating device may beneficially be placed at a distal end of the flap. The housing may be tubular. The housing may comprise a half tube shape. The hinged flap may be a half butterfly valve flap.

Furthermore, in another example, the valve further comprises a spring configured to keep the hinged flap in the rest position in the absence of oil in the housing. The proposed valve, object of the invention, may be made of metal or plastic, as long as it withstands the temperature conditions and other requirements. The temperature in the APU gearbox may be around 200 degrees Celsius.

A second aspect of the present invention relates to a gearbox of an auxiliary power unit of an aircraft, the gearbox comprising an oil sump having an overfill valve according to the first aspect of the present invention. In a preferred example, the overfill valve can be adapted to drain the excess of oil from the housing by the hinged flap opening the overfill valve upon the excess of oil achieving an oil level "h" when the gearbox is not running.

A third aspect of the present invention relates to an auxiliary power unit of an aircraft, the auxiliary power unit comprising a gearbox according to the second aspect of the invention.

### Brief description of the drawings

For a better understanding the above explanation and for the sole purpose of providing an example, some non-limiting drawings are included that schematically depict a practical embodiment.
Figure 1 shows a front and a side view of an example of an overfill valve according to the present invention for an oil sump integrated in an APU gearbox.
Figures 2A and 2B show a side view of the overfill valve according to the present invention during operation when the APU is not running.
Figure 3 shows a side view of the overfill valve during operation when the APU is running.
Figure 4 shows a schematic representation of the implied forces in the hinging of the hinging flap as part of the overfill valve according to the present invention.

### Description of a preferred embodiment

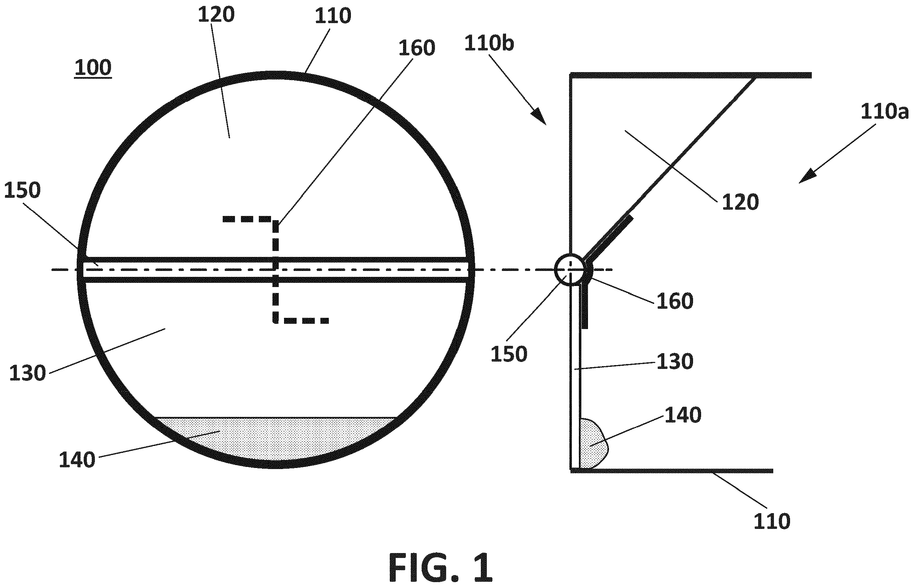

Figure 1 shows a front and a side view of an example of an overfill valve (100) according to the present invention. The overfill valve (100) is a valve for an oil sump integrated in a gearbox of APU of an aircraft. The overfill valve (100) is adapted to be connected to a manufactured port of the APU oil sump. Neither the oil sump nor the APU gearbox is shown in the figure.

The overfill valve (100) comprises a housing (110) connected by a first end or port (110a) to a manufactured port of the APU oil sump. The overfill valve (100) further comprises a fixed part (120) within the housing (110) and located in an upper part of a second end or port (110b) of the housing (110). The fixed part (120) closes the upper part of the second end or port (110b) of the housing (110).

Furthermore, the overfill valve (100) comprises a hinged flap (130) within the housing (110) located in a lower part of the second end or port (110b) of the housing (110) and which is normally closed in its rest position. As shown in figure 1, the hinged flap (130) is adapted to rest on a seat of the housing (110). The hinged flap (130) closes the lower part of the second end or port (110b) of the housing (110). Hence, the hinged flap (130) which in this example is a half disk that makes its natural position to be vertical can keep the overfill valve (100) normally closed to retain the airtightness of the APU gearbox.

The valve (100) further comprises a floating device (140) on the hinged flap (130). The floating device can be obtained by an air-filled or foam-filled 3d-printed/molded shell. The weight of the floating device (140) can also contribute keeping the hinged flap (130) in its rest position and the valve normally closed in the absence of oil in the housing (110) assuring the airtightness of the gearbox. Moreover, when the APU is running, the pressure in the gearbox applied on the surface of the hinging flap (130) also contributes to keep the valve normally closed.

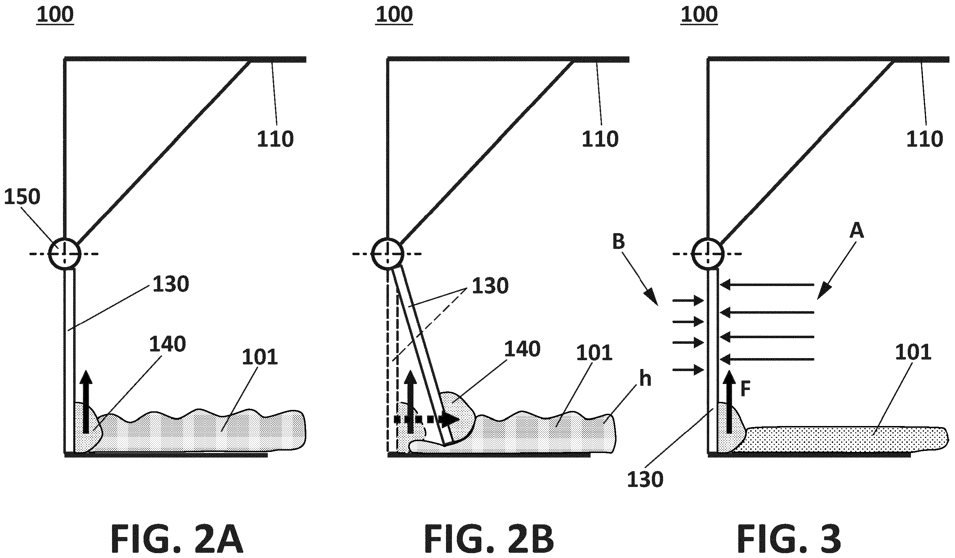

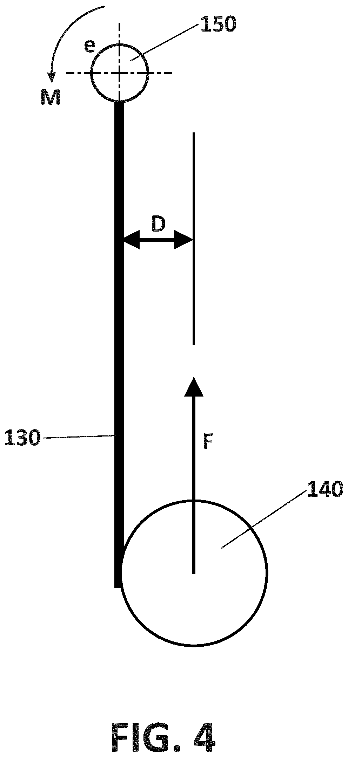

The overfill valve (100) further comprises a hinge (150) established between the fixed part (120) and the hinged flap (130). The hinge (150) connects the hinged flap (130) and the fixed part (120) within the housing (110) and permits the hinged flap (130) to hinge. Upon reception of an excess oil from the oil sump in the housing (110) and reaching the predetermined oil level "h" (see figure 2B) in the housing (110) that causes buoyancy of the floating device (140), the hinged flap (130) hinges around the hinge (150) based on a floating force in the floating device (140) caused by the buoyancy of the floating device and on an existing momentum that permits the hinged flap (130) to hinge as shown in figure 4.

Figures 2A and 2B show a side view of the overfill valve (100) according to the present invention. Figures 2A and 2B show the overfill valve (100) during operation and when the APU is not running. Hence, when the oil level in the oil sump of the APU gearbox is over a full level or mark, the housing (110) in the overfill valve shall start to be filled with excess oil (101) as shown in figure 2A.

In figure 2B, the oil level of the oil sump of the APU gearbox is higher than a full mark and reaches a threshold "h" and the APU itself is not running. Hence, the overfill valve (100) intends to be opened due to the excess of oil (101) in the housing reaching the predetermined oil level "h" that causes buoyancy of the floating device (140). The buoyancy of the floating device (140) provides a floating force that causes movement of the hinged flap (130) based on an existing momentum that causes the hinged flap (130) to hinge as shown in figure 4. Hence, if the APU is not running, the excess oil (101) achieving the oil level "h" will make the hinged flap (130) to open the overfill valve (100) thanks to the floating device (140), allowing the excess oil (101) to be drained out of the housing (110). When the oil level returns to the full mark in the oil sump below "h", the hinged flap (130) returns to its rest position closing the overfill valve (100). The oil level "h" is determined by the housing dimensions, the design of the hinged flap (130) and the floating device (140).

Figure 3 shows the overfill valve (100) during operation when the APU is running. As mentioned before, the oil level in the housing (110) is generally lower when the APU is running. Therefore, it may be unusual that the oil level reaches "h" so the valve can be opened. Moreover, the APU gearbox is a pressurized area having an APU gearbox running pressure (A), therefore the overfill valve (100) must avoid any possible depressurization. In the case that the APU is running and due to the gearbox running pressure, in order to have the valve open, the excess oil level in the housing must considerably exceed the threshold level "h", because the APU gearbox running pressure (A) will be higher than the ambient one (B), thus keeping the hinged flap (130) in its rest position and the overfill valve (100) closed. Hence, in this scenario, only if the level of excess oil (101) is very high, i.e. a very high oil level above "h" that causes the buoyancy of the floating device and provides a greater floating force "F" (compared to the scenario in figure 2B), the overfill valve (100) will open. However, the gearbox running pressure (A) will not be released as the valve will be draining only part of the excess oil (101) in the housing (110) without letting the pressurized air from the gear box to escape to the outside at any moment because the hinged flap (130) will come back to its closed position of Fig. 2B as soon as the oil level is decreased, and thus; keep the pressurization in the APU gearbox.

Figure 4 shows the hinge (150), the hinged flap (130) and the floating device (140) and the existing momentum "M" in the overfill valve (100) upon reception of an excess oil in the housing (110) (not shown in the figure) that causes buoyancy of the floating device (140) providing a floating force "F". The minimum lever arm (D) between the center of the floating device (140) that has a resultant floating force (F) and the hinge (150) "e" causes a moment "M" that will make the hinged flap (130) to hinge on the hinge (150).

Additionally, the overfill valve (100) further comprises a spring (160) which contributes keeping the valve normally closed in order to retain the airtightness of the APU gearbox when the APU is running. In other examples, the valves may not comprise the spring (160) as in figures 2 and 3.

Even though reference has been made to a specific embodiment of the invention, it is obvious for a person skilled in the art that the overfill valves described herein are susceptible to numerous variations and modifications, without departing from the scope of protection defined by the attached claims.

## Claims

1. An overfill valve (100) for an APU, auxiliary power unit, oil sump integrated in a gearbox of the APU in an aircraft, the overfill valve (100) comprising:
a housing (110) adapted to be connected by a first end (110a) to an oil sump port and to receive an excess of oil from the oil sump;
a fixed part (120) within the housing (110) and located in an upper part of a second end (110b) of the housing (110);
a hinged flap (130) within the housing (110) located in a lower part of the second end (110b) of the housing (110) and which is normally closed in its rest position, the hinge flap (130) adapted to close the overfill valve (100) in a rest position; and a hinge (150) between the fixed part (120) of the housing (110) and the hinged flap (130),
wherein
the hinged flap (130) comprises a floating device (140) configured to be subjected to a floating force adapted to hinge the hinged flap (130) from its rest position upon reception of the excess of oil in the housing (110); and
wherein the hinging of the hinged flap (130) from its rest position causes the opening of the overfill valve and the draining of at least part of the excess of oil past the hinged flap (130).

2. The overfill valve according to claim 1, wherein the hinging of the hinged flap (130) back to its rest position after the drain of the excess of oil causes the closing of the overfill valve (100) that avoids an air escape from the oil sump.

3. The overfill valve according to claims 1 or 2, further comprising a spring (160) configured to keep the hinged flap (130) in the rest position in the absence of oil in the housing (110).

4. The overfill valve according to any of the preceding claims, wherein the floating device (140) is established in a bottom part of the hinged flap (130).

5. The overfill valve according to any of the preceding claims, wherein the housing (110) is tubular.

6. The overfill valve according to claim 5, wherein the housing comprises a half tube shape.

7. The overfill valve according to claim 6, wherein the hinged flap (130) is a half butterfly valve flap.

8. A gearbox of an auxiliary power unit of an aircraft, the gearbox comprising an oil sump having an overfill valve (100) according to claims 1 to 7.

9. An auxiliary power unit of an aircraft, the auxiliary power unit comprising a gearbox according to claim 8.

## Patentansprüche

1. Überlaufventil (100) für eine Ölwanne einer APU, Hilfstriebwerks, welche in einem Getriebegehäuse der APU in einem Flugzeug integriert ist, wobei das Überlaufventil (100) aufweist:
ein Gehäuse (110), das geeignet ist, durch ein erstes Ende (110a) mit einem Ölwannenport verbunden zu werden und einen Ölüberschuss aus der Ölwanne aufzunehmen;
ein festes Teil (120), das in dem Gehäuse (110) vorgesehen ist und in einem oberen Teil eines zweiten Endes (110b) des Gehäuses (110) angeordnet ist;
eine Scharnierklappe (130) in dem Gehäuse (110), die in einem unteren Teil des zweiten Endes (110b) des Gehäuses (110) angeordnet ist, und die in ihrer Ruheposition normalerweise geschlossen ist, wobei die Scharnierklappe (130) geeignet ist, das Überlaufventil (100) in einer Ruheposition zu schließen; und
ein Gelenk (150) zwischen dem festen Teil (120) des Gehäuses (110) und der Scharnierklappe (130),
wobei die Scharnierklappe (130) eine schwimmende Vorrichtung (140) aufweist, die dazu ausgebildet ist, einer Auftriebskraft ausgesetzt zu werden, die geeignet ist, bei der Aufnahme des Ölüberschusses in dem Gehäuse (110) die Scharnierklappe (130) aus ihrer Ruheposition zu schwenken; und
wobei das Schwenken der Scharnierklappe (130) aus deren Ruheposition das Öffnen des Überlaufventils und das Ablassen mindestens eines Teils des Ölüberschusses an der Scharnierklappe (130) vorbei bewirkt.

2. Überlaufventil nach Anspruch 1, bei welchem das Schwenken der Scharnierklappe (130) zurück in ihre Ruheposition nach dem Ablaufen des Ölüberschusses das Schließen des Überlaufventils (100) bewirkt, wodurch ein Luftaustritt aus der Ölwanne verhindert wird.

3. Überlaufventil nach Anspruch 1 oder 2, ferner mit einer Feder (160), die dazu ausgebildet ist, die Scharnierklappe (130) in Abwesenheit von Öl in dem Gehäuse (110) in ihrer Ruheposition zu halten.

4. Überlaufventil nach einem der vorangehenden Ansprüche, bei welchem die schwimmende Vorrichtung (140) in einem unteren Teil der Scharnierklappe (130) ausgebildet ist.

5. Überlaufventil nach einem der vorangehenden Ansprüche, bei welchem das Gehäuse (110) rohrförmig ist.

6. Überlaufventil nach Anspruch 5, bei welchem das Gehäuse eine Halbrohrform aufweist.

7. Überlaufventil nach Anspruch 6, bei welchem die Scharnierklappe (130) eine halbe Drosselventilklappe ist.

8. Getriebe einer Hilfsturbine eines Flugzeugs, wobei das Getriebe eine Ölwanne mit einem Überlaufventil (100) nach einem der Ansprüche 1 bis 7 aufweist.

9. Hilfsturbine eines Flugzeugs, wobei die Hilfsturbine ein Getriebe nach Anspruch 8 aufweist.

## Revendications

1. Vanne de trop-plein (100) pour un carter d'huile d'APU, unité d'alimentation auxiliaire, intégré dans une boîte d'engrenages de l'APU dans un aéronef, la vanne de trop-plein (100) comprenant :
un boîtier (110) adapté pour être relié par une première extrémité (110a) à un orifice de carter d'huile et pour recevoir un excès d'huile provenant du carter d'huile ;
une partie fixe (120) dans le boîtier (110) et située dans une partie supérieure d'une seconde extrémité (110b) du boîtier (110) ;
un volet articulé (130) dans le boîtier (110) situé dans une partie inférieure de la seconde extrémité (110b) du boîtier (110) et qui est normalement fermé dans sa position de repos, le volet articulé (130) étant adapté pour fermer la vanne de trop-plein (100) dans une position de repos ; et
une charnière (150) entre la partie fixe (120) du boîtier (110) et le volet articulé (130),
dans laquelle
le volet articulé (130) comprend un dispositif flottant (140) configuré pour
être soumis à une force de flottaison adaptée pour articuler le volet articulé (130) depuis sa position de repos lors de la réception de l'excès d'huile dans le boîtier (110) ; et
dans laquelle l'articulation du volet articulé (130) depuis sa position de repos entraîne l'ouverture de la vanne de trop-plein et l'évacuation d'au moins une partie de l'excès d'huile au-delà du volet articulé (130).

2. Vanne de trop-plein selon la revendication 1, dans laquelle l'articulation du volet articulé (130) de retour à sa position de repos après l'évacuation de l'excès d'huile entraîne la fermeture de la vanne de trop-plein (100), ce qui évite un échappement d'air depuis le carter d'huile.

3. Vanne de trop-plein selon la revendication 1 ou 2, comprenant en outre un ressort (160) configuré pour maintenir le volet articulé (130) dans la position de repos en l'absence d'huile dans le boîtier (110).

4. Vanne de trop-plein selon l'une quelconque des revendications précédentes, dans laquelle le dispositif flottant (140) est établi dans une partie de fond du volet articulé (130).

5. Vanne de trop-plein selon l'une quelconque des revendications précédentes, dans laquelle le boîtier (110) est tubulaire.

6. Vanne de trop-plein selon la revendication 5, dans laquelle le boîtier comprend une forme de demi-tube.

7. Vanne de trop-plein selon la revendication 6, dans laquelle le volet articulé (130) est un volet de demi-vanne papillon.

8. Boîte d'engrenages d'une unité d'alimentation auxiliaire d'un aéronef, la boîte d'engrenages comprenant un carter d'huile possédant une vanne de trop-plein (100) selon les revendications 1 à 7.

9. Unité d'alimentation auxiliaire d'un aéronef, l'unité d'alimentation auxiliaire comprenant une boîte d'engrenages selon la revendication 8.
